# EUROPEAN PATENT APPLICATION

(11) **EP 3 067 530 A1**
(43) Date of publication of application: **14.09.2016**
(21) Application number: 15158141.0
(22) Date of filing: 09.03.2015
(51) Int. Cl.: F02C 7/042, F02C 9/20, F01D 17/04

(54) **Method for operating a gas turbine**

(71) Applicant: General Electric Technology GmbH, 5400 Baden (CH)
(72) Inventor: Sorato, Sebatiano, 8002 Zürich (CH); Micheli, Marco, 5430 Wettingen (CH); Kappis, Wolfgang, 5442 Fislisbach (CH); Magni, Fulvio, 5415 Nussbaumen (CH)
(74) Representative: Bernotti, Andrea

(57) **Abstract**

The gas turbine (1) has a compressor (2) with variable inlet guide vanes (6). The gas turbine output power is controlled at least by controlling the variable inlet guide vanes opening. The variable inlet guide vanes opening is controlled between a maximum opening and a minimum opening. A function (F) indicative of the mechanical stress undergone by compressor blades downstream of the variable inlet guide vanes (6) has an increasing line trend (T) from the maximum opening to the minimum opening of the variable inlet guide vanes (6). The function (F) has operating windows (OW1, OW2, OW3) in which the function (F) is smaller than a stress limit (L) and at least one intermediate window (IW1, IW2) between two operating windows (OW1, OW2, OW3), in the intermediate window (IW1, IW2) the function (F) being greater than the stress limit (L). Regulation of the variable inlet guide vanes (6) in the operating windows (OW1, OW2, OW3) is done by opening or closing the variable inlet guide vanes (6) with a given velocity when moving from one operating window (OW1, OW2, OW3) to another operating window (OW1, OW2, OW3) passing through an intermediate window (IW1, IW2).

## Description

### TECHNICAL FIELD

The present invention relates to a method for operating a gas turbine, which can be used for standalone but as well combined cycle power plant operation.

### BACKGROUND

Gas turbines of power plants are typically designed for operation with high efficiency and reduced emissions at high load (e.g. between 60-100% of the gas turbine nominal load). Operation at low load implies high emissions, but since operation at low load is an exception and is to be carried out only for limited time, these high emissions are accepted.

Currently gas turbines have to operate together with renewable power plants; this requires more flexibility to gas turbines and generally the need for the gas turbines to operate at low load for long time; this renders operation at low load with high emissions not acceptable any longer.

### SUMMARY

An aspect of the invention includes providing a method that permits gas turbine operation at low load.

Another aspect of the invention includes providing a method that permits parking the gas turbines at low load, such that the gas turbines run at the grid frequency (with electric generators driven by the gas turbines connected to the grid or not), but the generators do not provide power to the grid or they only provide a limited power to the grid; in this condition the gas turbines are ready to be quickly loaded when needed for the generators to provide power to the grid.

These and further aspects are attained by providing a method in accordance with the accompanying claims.

### BRIEF DESCRIPTION OF THE DRAWINGS

Further characteristics and advantages will be more apparent from the description of a preferred but non-exclusive embodiment of the method, illustrated by way of non-limiting example in the accompanying drawings, in which:
Figure 1 shows a possible VIGV opening-compressor blade stress relationship in an operating window according to the prior art;
Figure 2 shows a possible VIGV opening-compressor blade stress relationship in operating windows according to the invention;
Figure 3 shows an example of a combined cycle power plant;
Figures 4 and 5 show the combustion chamber and its main components;
Figure 6 and 7 show VIGV with different opening.

### DETAILED DESCRIPTION OF EXEMPLARY EMBODIMENTS

In the following a gas turbine and the combined cycle power plant the gas turbine is part of are described first.

The gas turbine 1 comprises a compressor 2, a combustion chamber 3 and a turbine 4.

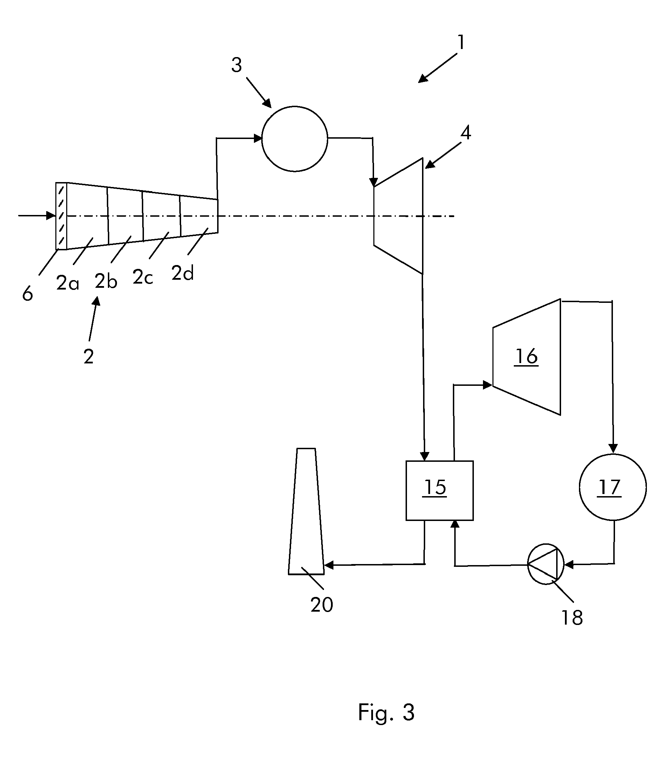

The compressor 2 has variable inlet guide vanes 6, which comprise vanes whose position can be adjusted, for adjusting the flow of oxidizer (inlet mass flow), such as air, entering the compressor. Downstream of the variable inlet guide vanes 6, the compressor 2 has a number of compressor stages 2a, 2b, 2c, 2d, typically each comprising rotating blades and stationary vanes. The number of compressor stages depends on the specific needs; for example figure 3 shows four compressor stages, it is anyhow clear that the compressor 2 can have less than four stages or more than four stages, such as ten stages or even more.

Downstream of the compressor 2 the gas turbine 1 has the combustion chamber 3. The combustion chamber 3 is preferably a premixed combustion chamber (i.e. a combustion chamber adapted for combusting the fuel in premixed conditions). The combustion chamber 3 has a combustor 9 connected to one or typically more than one burners 10. During operation the fuel is supplied into the burners 10 together with air to form a mixture, the mixture passes then from the burners 10 into the combustor 9 where it is combusted.

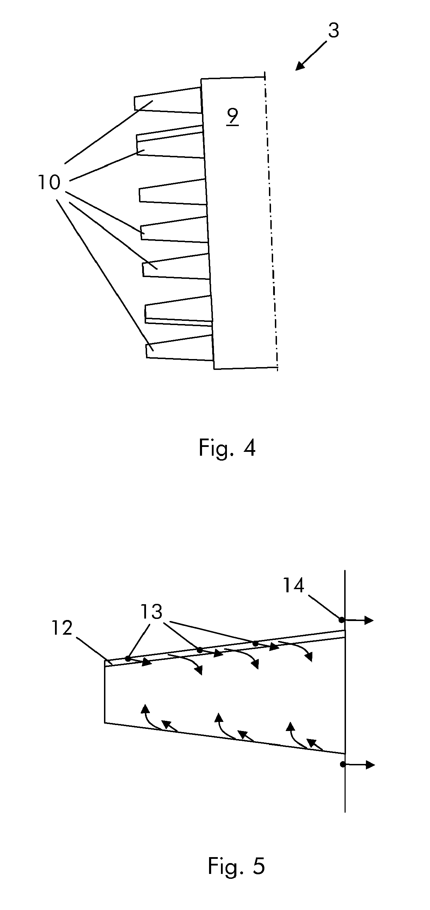

Figure 5 shows an example of the burner. The burner can have a cone shape, with slots 12 for air entrance and premixing fuel injectors 13 adjacent the slots 12.

In addition, preferably the burners 10 also have pilot fuel injectors 14 for injecting fuel directly into the combustor 9; the pilot fuel injected via the pilot fuel injectors 14 undergoes diffusion combustion. The pilot fuel injectors 14 can be located around each burner 10, e.g. over a circumference.

Downstream of the combustion chamber 3 the gas turbine 1 has the turbine 4 that expands the hot gas generated in the combustion chamber to collect mechanical energy, e.g. to activate an electrical generator (not shown).

Figure 3 shows an example of a combined cycle power plant that further includes a boiler 15 receiving exhaust gas discharged from the turbine 4 to evaporate water and generate superheated steam. The superheated steam is expanded in a steam turbine 16 to collect further mechanical energy, e.g. used to activate an electrical generator (the same electrical generator connected to the gas turbine or a different electrical generator).

Connected downstream of the steam turbine 16, there is a condenser 17, for condensing the steam, and a pump 18 for forwarding the water derived from condensation to the boiler 15.

The exhaust gas after passing through the boiler 15 is sent to a stack 20 and discharged into the atmosphere.

In order to control the load of the turbine (and thus of the whole combined cycle power plant) it could be possible to control the hot gas temperature within the combustion chamber 3; nevertheless such a control would substantially affect the efficiency of the gas turbine at low load. For this reason, in order to control the gas turbine load, it is preferred to control and adjust the mass flow through the gas turbine via the variable inlet guide vanes 6. By way of this control, the air mass flow is regulated together with the fuel amount, such that the gas turbine load is regulated but the flame temperature is maintained well apart from the lean blow off condition; flame extinction and high emissions are thus limited or avoided.

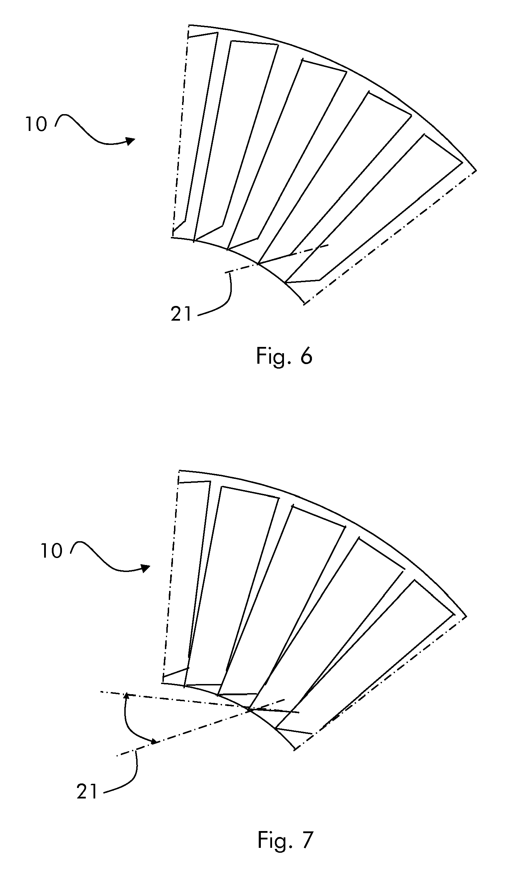

Adjusting the variable inlet guide vanes 6 causes, in addition to adjusting the mass flow, high stress in the compressor blades downstream of the variable inlet guide vanes 6. The stress increases when the opening of the variable inlet guide vanes 6 is reduced. For this reason traditionally the regulation of the variable inlet guide vanes 6 is done only in a limited opening range, e.g. in an opening range between 0 - -30° in order to limit the stress on the compressor blades (0° indicates the reference position with maximum opening, with variable inlet guide vanes 6 rotated by 0° with respect to a reference axis 21, this position is shown in figure 6; -30° indicates a position with reduced opening, with the variable inlet guide vanes 6 rotated by 30° with respect to the reference axis 21 and is shown in figure 7).

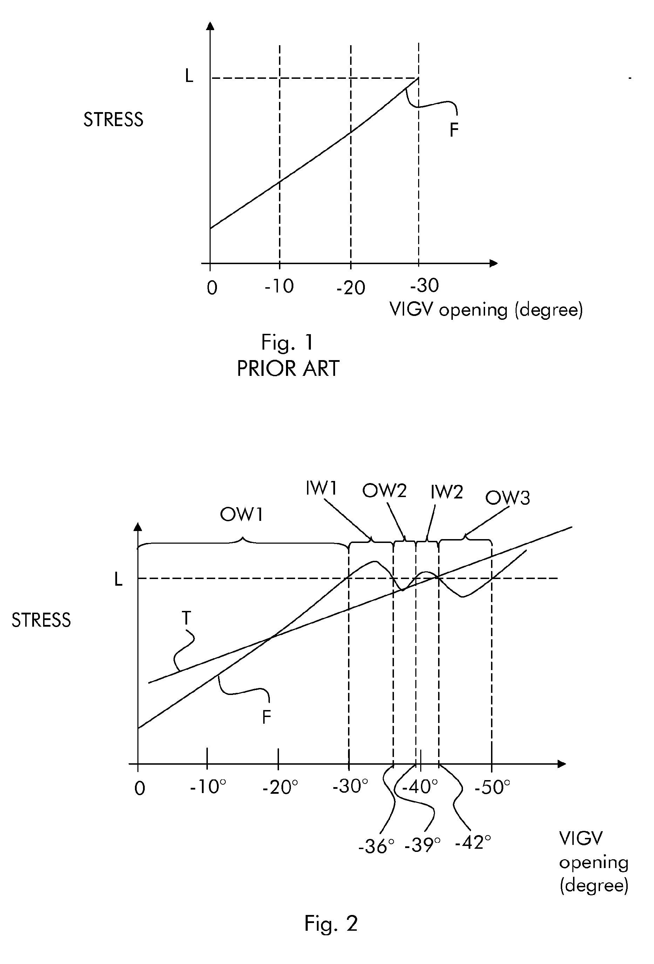

For example, figure 1 shows the relationship between variable inlet guide vanes (VIGV) opening and stress.

The function F indicates the stress undergone by the blades of the compressor; the function F can be measured, e.g. via deformation sensors applied on the blades and connected to radio transmitters.

L indicates the stress limit for the compressor blades above which reliable operation is not possible any longer. Different stress limits can be defined for the blades, e.g. a stress limit for continuous operation or a stress limit for transient operation; L indicates the stress limit for continuous operation.

Traditionally, further load regulation (i.e. load regulation when further closing the VIGV beyond e.g. -30° is not possible because of the too high stress) of the gas turbine is done by only regulating the fuel supply, without any air regulation, with the risk of reaching the lean blow off conditions in case a too small amount of fuel is fed to the gas turbine.

The inventors have surprisingly discovered that the stress does not continuously increase, but there are zones where the stress increases and zones where the stress decreases, i.e. the stress does not increase in a monotonic way; this allows variable inlet guide vane regulation in a window much broader than the limited window (e.g. 0 - -30°) in a reliable way; in other words according to the invention it is possible the regulation of the gas turbine load by VIGV regulation also at low load, with limited emissions (because operation is apart from the lean blow off conditions) and in reliable operating conditions for the gas turbine.

According to the method
- the gas turbine output power is controlled at least by controlling the variable inlet guide vanes opening (this allows to control the oxidizer, i.e. inlet mass flow such as air through the compressor 2),
- the variable inlet guide vanes opening is controlled between a maximum opening (e.g. 0°, figure 6) and a minimum opening (e.g. -50°),
- a function F indicative of the mechanical stress undergone by compressor blades downstream of the variable inlet guide vanes has an increasing line trend T from the maximum opening (e.g. 0°) to the minimum opening (e.g. -50°) of the variable inlet guide vanes 6,
- the function F indicative of the mechanical stress undergone by the compressor blades downstream of the variable inlet guide vanes has:
   ∘ operating windows OW1, OW2, OW3 in which the function F is smaller than the stress limit L,
   o at least one intermediate window IW1, IW2 between two operating windows OW1-OW2 and OW2-OW3, in the intermediate windows IW1, IW2 the function F being greater than the stress limit L,
- at or below the stress limit L the gas turbine can reliably continuously operate and above the stress limit L the gas turbine cannot reliably continuously operate.
   The method comprises
- regulating the variable inlet guide vanes 6 in the operating windows OW1, OW2, OW3,
- opening or closing the variable inlet guide vanes 6 with a given velocity when moving from one operating window OW1, OW2, OW3 to another operating window passing through an intermediate window IW1, IW2.

For example, when operating in the operating window OW1 and willing to reduce the gas turbine load, the variable inlet guide vanes 6 are closed (the fuel amount supplied into the combustion chamber 3 is reduced as well) from the reference position (maximum opening, 0°) to a more closed position, e.g. -30°. Then the variable inlet guide vanes 6 are quickly closed (according to the given velocity) from -30° to -36° to quickly pass through the intermediate window IW1. In the intermediate window IW1 the stress is higher than the stress limit L the compressor blades can continuously undergo, but since the time the compressor blades undergo this high stress is limited, passing through the intermediate window IW1 does not affect the life time of the compressor blades. Then from -36° the compressor blades can be further regulated (at low load) between -36° to -39°. In case the intermediate window IW2 has to be overcome the procedure is the same as that described. In addition, in case loading is needed instead of de-loading (i.e. a passage from e.g. the operating window OW2 to the operating window OW1 is need, the procedure is the same as those described with the obvious changes (loading instead of de-loading and fuel amount increase instead of decrease).

In different examples, the function (F) can be indicative of:
- the mechanical stress of the blades of the compressor stage undergoing the largest stress among the compressor stages, or
- the stress of the blades of a second compressor stage 2b (it was ascertained that at this stage the stress is high), or
- the stress of the blades of a third compressor stage 2c (it was ascertained that at this stage the stress is high).

The given velocity must be equal to or greater than a minimum admissible velocity for the regulation of the variable inlet guide vanes 6. For example the minimum admissible velocity can define the maximum allowed time within the intermediate regions IW1 and/or IW2.

In different examples the given velocity is the maximum regulation velocity of the variable inlet guide vanes 6 or the given velocity is the velocity of the variable inlet guide vanes corresponding to the loading or de-loading velocity of the gas turbine.

For example continuous regulation of the gas turbine can be carried out in the operating windows OW1, OW2, OW3. Together with this regulation or as an alternative, it is also possible to use the different operating windows for parking the gas turbine at low load.

In this case, the method comprises regulating the variable inlet guide vanes
- in the first operating window OW1 corresponding to larger inlet guide vanes opening for load regulation of the gas turbine,
- in operating windows OW2, OW3 corresponding to smaller inlet guide vanes opening, for parking the gas turbine at low load and having it ready for load increase.

For example, the gas turbine can be parked at a load corresponding to 40% of the gas turbine nominal load with variable inlet guide vane opening of -38° (i.e. within the operating window OW1) and at a load corresponding to 20% of the gas turbine nominal load with variable inlet guide vane opening of -46° (i.e. within the operating window OW2).

Naturally the features described may be independently provided from one another.

### REFERENCE NUMBERS

- 1: gas turbine
- 2: compressor
- 2a-d: compressor stages
- 3: combustion chamber
- 4: turbine
- 6: variable inlet guide vanes
- 9: combustor
- 10: burner
- 12: slot
- 13: premixing fuel injectors
- 14: pilot fuel injectors
- 15: boiler
- 16: steam turbine
- 17: condenser
- 18: pump
- 20: stack
- 21: reference axis
- F: function indicative of the mechanical stress
- L: stress limit
- IW1, IW2: intermediate window
- OW1, OW2, OW3: operating widow
- T: line trend

## Claims

1. A method for operating a gas turbine, wherein
the gas turbine (1) has a compressor (2) with variable inlet guide vanes (6),
the gas turbine output power is controlled at least by controlling the variable inlet guide vanes opening,
the variable inlet guide vanes opening is controlled between a maximum opening and a minimum opening,
a function (F) indicative of the mechanical stress undergone by compressor blades downstream of the variable inlet guide vanes (6) has an increasing line trend (T) from the maximum opening to the minimum opening of the variable inlet guide vanes (6),
the function (F) has
operating windows (OW1, OW2, OW3) in which the function (F) is smaller than a stress limit (L), at least one intermediate window (IW1, IW2) between two operating windows (OW1, OW2, OW3), in the intermediate window (IW1, IW2) the function (F) being greater than the stress limit (L),
at or below the stress limit L the gas turbine can reliably continuously operate and above the stress limit the gas turbine cannot reliably continuously operate,
**characterized by**
regulating the variable inlet guide vanes (6) in the operating windows (OW1, OW2, OW3),
opening or closing the variable inlet guide vanes (6) with a given velocity when moving from one operating window (OW1, OW2, OW3) to another operating window (OW1, OW2, OW3) passing through an intermediate window (IW1, IW2).

2. The method of claim 1, **characterized in that** the given velocity is equal to or greater than a minimum admissible velocity for the regulation of the variable inlet guide vanes (6).

3. The method of claim 1, **characterized in that** the given velocity is the maximum regulation velocity of the variable inlet guide vanes (6).

4. The method of claim 1, **characterized in that** the given velocity is the velocity of the variable inlet guide vanes (6) corresponding to the loading or de-loading velocity of the gas turbine (1).

5. The method of claim 1, **characterized by** regulating the variable inlet guide vanes (6)
in at least a first operating window (OW1) corresponding to larger inlet guide vanes opening for load regulation of the gas turbine (1),
in at least an operating windows (OW2, OW3) corresponding to smaller inlet guide vanes opening, for parking the gas turbine at low load and having it ready for load increase.

6. The method of claim 1, **characterized in that** the compressor (2) has a number of compressor stages (2a, 2b, 2c, 2d),
the function (F) is indicative of the mechanical stress of the blades of a compressor stage undergoing the largest stress among the compressor stages.

7. The method of claim 1, **characterized in that** the compressor (2) has a number of compressor stages (2a, 2b, 2c, 2d),
the function (F) indicative of the mechanical stress undergone by compressor blades downstream of the variable inlet guide vanes (6) is indicative of the stress of the blades of a second compressor stage (2b).

8. The method of claim 1, **characterized in that** the compressor (2) has a number of compressor stages (2a, 2b, 2c, 2d),
the function (F) indicative of the mechanical stress undergone by compressor blades downstream of the variable inlet guide vanes (6) is indicative of the stress of the blades of a third compressor stage (2c).

9. The method of claim 1, **characterized in that** the gas turbine (1) is part of a combined cycle power plant.
